# DEMANDE DE BREVET EUROPEEN

(11) **EP 1 113 683 A1**
(43) Date de publication de la demande: **04.07.2001**
(21) Numéro de dépôt: 00204467.5
(22) Date de dépôt: 12.12.2000
(51) Int. Cl.: H04Q 7/32

(54) **Protection d'un appareil radiotéléphonique contre le vol**

(30) Priorité: 21.12.1999 FR 9916136
(71) Demandeur: Koninklijke Philips Electronics N.V., 5621 BA Eindhoven (NL)
(72) Inventeur: Decotignie, Philippe, 75008 Paris (FR)
(74) Mandataire: de la Fouchardière, Marie-Noelle

(57) **Abrégé**

L'invention propose un procédé de protection d'un appareil de radio téléphonie mobile destiné à recevoir un module d'identification d'utilisateur pour pouvoir fonctionner. L'invention a pour but de protéger un tel appareil contre le vol.

Pour cela un appareil selon l'invention comporte des moyens pour :
- empêcher l'utilisation de l'appareil avec un module d'identification autre que celui de l'utilisateur,
- demander un code de déblocage à l'utilisateur au bout d'un faible temps d'inaction de l'appareil, et empêcher l'utilisation de l'appareil si ce code n'est pas fourni.

## Description

### Domaine de l'invention

L'invention concerne un appareil de radiotéléphonie mobile destiné à recevoir un module d'identification d'utilisateur, ledit appareil comportant :
- des moyens de liaison pour établir un lien entre l'appareil et le module d'identification placé dans l'appareil,
- des moyens de blocage pour empêcher le fonctionnement normal de l'appareil,
- des moyens de test pour activer les moyens de blocage lorsque le module d'identification placé dans l'appareil n'est pas celui qui est lié à l'appareil.

L'invention concerne également un procédé de protection d'un tel appareil, ainsi qu'un programme d'ordinateur pour la mise en oeuvre d'un tel procédé.

L'invention a notamment des applications dans le domaine de la radiotéléphonie portable. Les appareils de radiotéléphonie portable sont destinés à accompagner leurs utilisateurs dans leurs déplacements. Il arrive que ces appareils soient perdus ou volés.

### Arrière plan technologique de l'invention

Le brevet américain 5,913,175 délivré le 15 juin 1999 décrit un procédé de protection d'un radiotéléphone qui permet d'éviter qu'un téléphone perdu ou volé puisse être utilisé par un tiers avec un autre module d'identification d'utilisateur. Ce procédé consiste à établir un lien entre l'appareil et un module d'identification d'utilisateur spécifique, et à bloquer le fonctionnement normal de l'appareil lorsque le module d'identification d'utilisateur qui est placé dans l'appareil n'est pas celui qui est lié à l'appareil.

Lorsque l'appareil est perdu ou volé avec le module d'identification auquel il est lié, l'utilisateur doit en aviser l'opérateur de façon à bloquer l'usage de son module d'identification au niveau du réseau.

Cela signifie que l'appareil peut être utilisé librement jusqu'à ce que le module d'identification auquel il est lié soit bloqué par le réseau. Cela peut prendre un certain temps.

### Résumé de l'invention

L'invention a notamment pour but de résoudre ce problème. Pour cela, un appareil selon l'invention et tel que décrit dans le paragraphe introductif est caractérisé en ce qu'il comporte :
- des moyens de temporisation pour activer les moyens de blocage après un temps déterminé d'inaction de l'appareil,
- et des moyens de déblocage pour permettre le fonctionnement normal de l'appareil lorsque le module d'identification placé dans l'appareil est celui qui est lié à l'appareil, et lorsqu'un code de déblocage est fourni par l'utilisateur.

Ainsi, lorsque l'appareil tombe entre les mains d'un tiers, avec le module d'identification auquel il est lié, il est très probablement inactif depuis un temps suffisamment long pour que son fonctionnement normal soit bloqué (de façon avantageuse, le temps d'inaction au-delà duquel les moyens de blocage sont activés est de l'ordre de quelques minutes). L'appareil ne peut donc plus être utilisé sans fournir le code de déblocage.

Grâce à l'invention, l'appareil perdu ou volé devient totalement inutilisable. Un fraudeur ne peut pas passer de communications aux frais du propriétaire de l'appareil. Mais il ne peut pas non plus utiliser l'appareil avec un autre module d'identification. Le vol de l'appareil devient tout à fait inutile. L'invention constitue donc une protection contre l'acte de vol.

Dans un mode de réalisation particulièrement simple, les moyens de liaison comportent des moyens de lecture et de mémorisation d'une donnée stockée dans le module d'identification, et les moyens de test comparent la donnée ainsi mémorisée à la donnée stockée dans le module d'identification qui est placé dans l'appareil. La donnée stockée est par exemple constituée par le numéro international d'identification IMSI qui est contenu dans le module d'identification (cf. normes relatives aux systèmes de radio téléphonie GSM). Ainsi, le module d'identification est lié à l'appareil de façon automatique, sans intervention de l'utilisateur, en particulier sans qu'il ait à saisir un code spécifique.

De façon avantageuse, le code de déblocage qui doit être fourni pour retourner à un mode de fonctionnement normal est avantageusement constitué par le code PIN (de l'anglais Personal Identity Number) qui est contenu dans le module d'identification (cf. normes relatives aux systèmes de radio téléphonie GSM). Ainsi l'utilisateur n'a pas à mémoriser de code supplémentaire pour assurer la protection de son appareil.

### Brève description des dessins

L'invention sera mieux comprise et d'autres détails apparaîtront dans la description qui va suivre en regard des dessins annexés qui sont donnés à titre d'exemples non limitatifs et dans lesquels:
- la figure 1 représente un appareil selon l'invention,
- la figure 2 représente un schéma électrique global de l'appareil de la figure 1,
- la figure 3 représente un organigramme explicitant le fonctionnement de l'appareil de la figure 1.

### Description d'un mode de réalisation préférentiel de l'invention

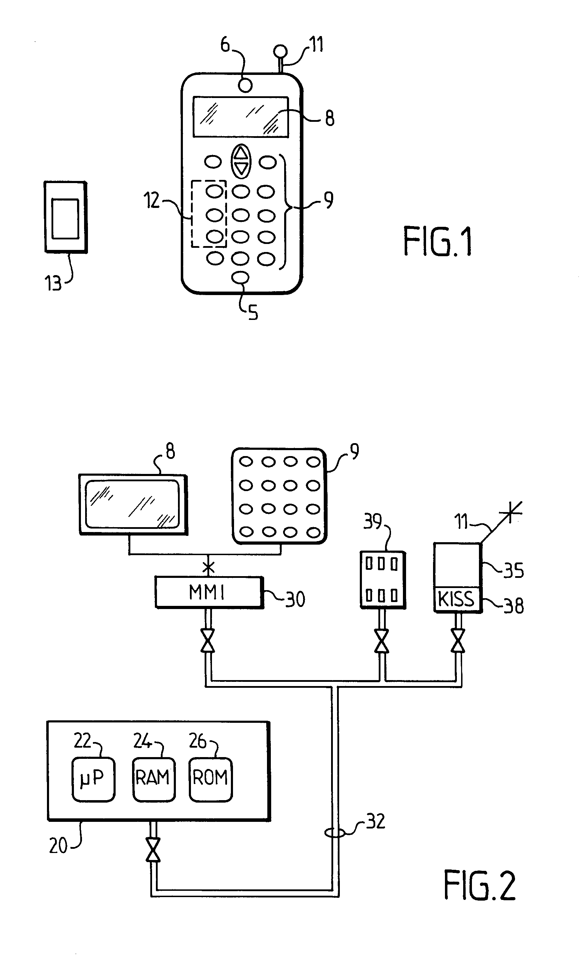

Sur la figure 1, on a représenté un appareil électronique 1 conforme à l'invention. Dans l'exemple décrit ici cet appareil est un radiotéléphone portable du genre utilisé dans les systèmes cellulaires. Il comporte notamment un microphone 5, un écouteur 6, un écran 8, un clavier 9, et une antenne 11. L'appareil 1 comporte également un logement 12 destiné à recevoir un module d'identification d'utilisateur 13. Dans l'exemple de réalisation décrit ici, ce module d'identification 13 est une carte porteuse d'un circuit intégré dans lequel sont stockées des informations, notamment un numéro international d'identification couramment appelé numéro IMSI, et un numéro personnel d'identification couramment appelé code PIN.

La figure 2 donne le schéma électrique global de cet appareil. Le fonctionnement de l'appareil est essentiellement régi par un ensemble à microprocesseur 20 qui comporte un microprocesseur 22, auquel sont associées une mémoire vive 24 et une mémoire morte 26. Cet ensemble est relié à un dispositif d'interface homme machine 30 par une ligne commune 32. Ce dispositif d'interface homme machine 32 contrôle l'écran 8 et le clavier 9. La ligne commune 32 relie également l'ensemble à microprocesseur 20 à un ensemble d'émission réception 35 via un circuit d'interface 38. L'ensemble d'émission réception est connecté à l'antenne 11. Enfin, la ligne commune 32 relie aussi l'ensemble à microprocesseur 20 à un dispositif 39 de lecture de carte.

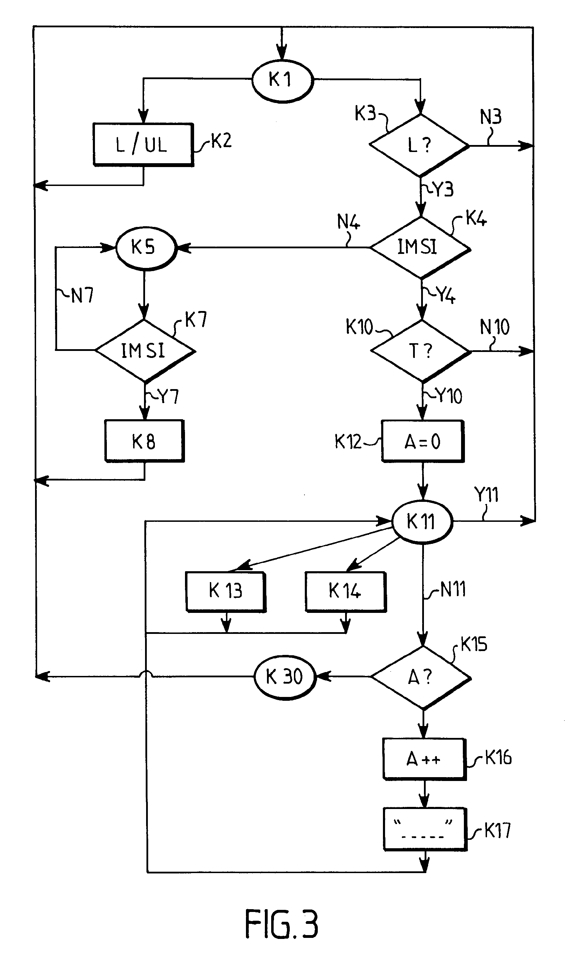

Sur la figure 3 on a représenté un organigramme de fonctionnement d'un appareil selon l'invention. Cet organigramme débute à la case K1. A la case K1, l'appareil est dans un état de disponibilité, c'est-à-dire que l'utilisateur a accès à toutes les fonctions de l'appareil. L'utilisateur a le choix de verrouiller ou non son appareil. Ce verrouillage (L) / déverrouillage (UL) s'effectue en accédant à un menu de configuration de l'appareil. Lorsque l'utilisateur verrouille son appareil (case K2), le module d'identification qui est dans l'appareil est automatiquement lié à l'appareil. Pour cela, l'appareil va lire une donnée D1 dans le module d'identification (par exemple le numéro international d'identification IMSI), et il la stocke dans sa mémoire vive 24. Une fois verrouillé, l'appareil reste dans l'état de disponibilité indiqué à la case K1. Lorsque l'appareil est dans l'état de disponibilité, on regarde s'il est verrouillé (case K3). S'il n'est pas verrouillé (flèche N3), l'appareil reste dans l'état de disponibilité indiqué à la case K1. S'il est verrouillé (flèche Y3), on regarde si le module d'identification qui est placé dans l'appareil est celui qui est lié à l'appareil (case K4).

Si le module d'identification qui est placé dans l'appareil n'est pas celui qui est lié à l'appareil (flèche N4), l'appareil passe à un premier état de blocage indiqué à la case K5. Dans ce premier état de blocage, l'appareil se déconnecte du réseau. Il ne peut donc plus recevoir d'appel entrant ni émettre d'appel sortant (à l'exception de numéros d'urgence éventuellement). Dans l'état de blocage K5, on affiche à l'écran un message invitant l'utilisateur à insérer le module approprié dans l'appareil. Et lorsque l'utilisateur insère un nouveau module, on regarde si ce nouveau module d'identification est celui qui est lié à l'appareil (case K7). Si c'est le cas (flèche Y7), l'appareil se reconnecte au réseau selon la procédure habituelle (case K8) puis l'appareil retourne dans l'état de disponibilité indiqué à la case K1. Sinon (flèche N7), le fonctionnement reprend à la case K5. La seule façon de sortir de ce premier état de blocage est donc de placer dans l'appareil le module d'identification qui est lié à l'appareil.

Si le module d'identification qui est placé dans l'appareil est lié à l'appareil (flèche Y4), on regarde si l'appareil est resté dans l'état de disponibilité depuis un certain temps T, de l'ordre de quelques minutes par exemple (case K10). Si ce n'est pas le cas (flèche N10), l'appareil reste dans l'état de disponibilité indiqué à la case K1. Si c'est le cas (flèche Y10), l'appareil passe à un second état de blocage indiqué à la case K11 en transitant par une étape d'initialisation K12 qui permet d'initialiser une variable A représentative du nombre d'essais effectués pour fournir un code de déblocage (par exemple le numéro personnel d'identification PIN).

Dans ce second état de blocage, l'appareil ne traite que les appels entrants (case K13), et éventuellement les appels sortant qui correspondent à des numéros d'urgence (case K14). Une fois ces appels traités, l'appareil repasse au second état de blocage indiqué à la case K11. Dans le second état de blocage K11, on affiche à l'écran un message invitant l'utilisateur à fournir un code de déblocage. Si le code saisi par l'utilisateur est reconnu (flèche Y11), l'appareil repasse à l'état de disponibilité indiqué à la case K1. S'il n'est pas reconnu (flèche N11), on teste la valeur de la variable A (case K15). Si cette valeur est inférieure à un certain chiffre (par exemple 3), la valeur de A est augmentée d'une unité (case K16), et un message est affiché à l'écran pour indiquer à l'utilisateur que le code n'est pas valable (case K17). Puis l'appareil repasse dans le second état de blocage indiqué à la case K11. Si la variable A est supérieure ou égale audit chiffre, le test de la case K15 provoque un blocage total de l'appareil indiqué à la case K30. Pour sortir de ce troisième état de blocage, il faut s'adresser à l'organisme qui fournit le module d'identification. On se retrouve alors dans l'état de disponibilité K1.

Dans un autre mode de réalisation de l'invention, lorsque l'utilisateur verrouille le téléphone, l'appareil demande le nom de l'utilisateur. Le nom fourni par l'utilisateur est stocké dans la mémoire vive 24 de l'appareil. Lorsque le module d'identification qui est dans l'appareil n'est pas celui qui est lié à l'appareil, l'appareil affiche le nom de l'utilisateur avant de lui demander d'introduire son module d'identification comme indiqué à la case K5. L'appareil affiche aussi le nom de l'utilisateur avant de lui demander de fournir son code personnel comme indiqué à la case K11.

Le mode de réalisation qui vient d'être décrit est particulièrement efficace, parce qu'il prévoit deux modes de blocage distincts selon que le module d'identification qui est en place dans l'appareil est ou non lié à l'appareil. Le premier mode de blocage s'applique dans le cas où l'appareil a été perdu ou volé. Le but est d'empêcher que l'appareil soit alors utilisable avec un autre module d'identification. Il est donc avantageux de bloquer à la fois les appels entrants et les appels sortants. Le second mode de blocage s'applique dans le cas où le module d'identification qui est lié à l'appareil est en place dans l'appareil, et l'appareil est dans un état de disponibilité. Le but est d'empêcher qu'un tiers puisse émettre des appels sortants avec cet appareil s'il est perdu, volé ou laissé sans surveillance pendant quelques temps. Dans ce cas il est souhaitable que l'utilisateur puisse continuer à recevoir directement ses appels entrants.

Dans un autre mode de réalisation, on utilise les mêmes moyens de blocage que le module d'identification qui est en place dans l'appareil soit ou non lié à l'appareil, par exemple les seconds moyens de blocage. Dans ce cas il est possible de recevoir des appels entrants destinés au module d'identification qui est dans l'appareil, même lorsque ce module d'identification placé dans l'appareil n'est pas lié à l'appareil.

## Revendications

1. Appareil de radiotéléphonie mobile destiné à recevoir un module d'identification d'utilisateur, ledit appareil comportant:
- des moyens de liaison pour établir un lien entre l'appareil et le module d'identification placé dans l'appareil,
- des moyens de blocage pour empêcher le fonctionnement normal de l'appareil,
- des moyens de test pour activer les moyens de blocage lorsque le module d'identification placé dans l'appareil n'est pas celui qui est lié à l'appareil,
caractérisé en ce qu'il comporte:
- des moyens de temporisation pour activer les moyens de blocage après un temps déterminé d'inaction de l'appareil,
- et des moyens de déblocage pour permettre le fonctionnement normal de l'appareil lorsque le module d'identification placé dans l'appareil est celui qui est lié à l'appareil, et lorsqu'un code de déblocage est fourni par l'utilisateur.

2. Appareil selon la revendication 1, caractérisé en ce que lesdits moyens de blocage comportent des premiers moyens de blocage pour empêcher l'émission et la réception d'appels lorsque le module d'identification placé dans l'appareil n'est pas celui qui est lié à l'appareil, et des seconds moyens de blocage pour empêcher l'émission d'appels après un temps déterminé d'inaction de l'appareil, à l'exception d'un ou plusieurs numéros d'urgence éventuellement.

3. Appareil selon la revendication 1, caractérisé en ce qu'il comporte des moyens de verrouillage / déverrouillage de l'appareil, lesdits moyens de blocage n'étant activables que lorsque l'appareil est verrouillé, et ledit lien étant établi lors du verrouillage de l'appareil.

4. Appareil selon la revendication 1, caractérisé en ce que lesdits moyens de liaison comportent des moyens de lecture et de mémorisation d'une donnée stockée dans le module d'identification, et en ce que lesdits moyens de test comparent la donnée ainsi mémorisée à la donnée stockée dans le module d'identification qui est placé dans l'appareil.

5. Appareil selon la revendication 3, caractérisé en ce que ladite donnée est constituée par le numéro d'identification international stocké dans le module d'identification d'utilisateur.

6. Appareil selon la revendication 1, caractérisé en ce que ledit code de déblocage est constitué par le numéro d'identification personnel stocké dans le module d'identification.

7. Procédé de protection d'un appareil de radiotéléphonie mobile destiné à recevoir un module d'identification d'utilisateur, ledit procédé comportant les étapes suivantes:
- établissement d'un lien entre l'appareil et le module d'identification placé dans l'appareil,
- test pour vérifier si le module d'identification placé dans l'appareil est celui qui est lié à l'appareil,
- blocage du fonctionnement normal de l'appareil lorsque le module d'identification placé dans l'appareil n'est pas celui qui est lié à l'appareil,
caractérisé en ce qu'il comporte les étapes suivantes :
- détection d'une période d'inactivité de l'appareil,
- blocage du fonctionnement normal de l'appareil lorsque ladite période d'inactivité a été détectée,
- déblocage permettant le fonctionnement normal de l'appareil lorsque le module d'identification placé dans l'appareil est celui qui est lié à l'appareil, et lorsqu'un code de déblocage est fourni par l'utilisateur.

8. Procédé selon la revendication 6 de protection d'un appareil de radiotéléphonie mobile, caractérisé en ce qu'il comporte une étape de verrouillage de l'appareil, les étapes de blocage n'étant exécutables que lorsque l'appareil est verrouillé, et l'étape d'établissement d'un lien entre l'appareil et le module d'identification placé dans l'appareil étant exécutée lors du verrouillage de l'appareil.

9. Procédé selon la revendication 6 de protection d'un appareil de radiotéléphonie mobile, caractérisé en ce que l'étape d'établissement d'un lien entre l'appareil et le module d'identification placé dans l'appareil comporte une étape de lecture et de mémorisation d'une donnée stockée dans ledit module d'identification, et en ce que l'étape de test consiste à comparer la donnée ainsi mémorisée à la donnée stockée dans le module d'identification qui est placé dans l'appareil.

10. Programme d'ordinateur comportant des moyens pour la mise en oeuvre d'un procédé selon la revendication 6 de protection d'un appareil de radiotéléphonie mobile.
